# EUROPÄISCHE PATENTANMELDUNG

(11) **EP 2 465 651 A1**
(43) Veröffentlichungstag der Anmeldung: **20.06.2012**
(21) Anmeldenummer: 10195030.1
(22) Anmeldetag: 14.12.2010
(51) Int. Cl.: B25J 15/00

(54) **Vorrichtung zur Aufnahme und Handhabung eines Bauteils und Verfahren zum Herstellen einer solchen Vorrichtung**

(71) Anmelder: FFT EDAG Produktionssysteme GmbH & Co. KG, 36041 Fulda (DE)
(72) Erfinder: Schaafhausen, Wilfried, 88045, Friedrichshafen (DE)
(74) Vertreter: Schuhbießer, Irmgard Gertrud

(57) **Zusammenfassung**

Es sind eine Vorrichtung (10) zur Aufnahme und Handhabung eines Bauteils (2a) eines Gegenstands (2) und ein Verfahren zum Herstellen einer solchen Vorrichtung bereitgestellt. Die Vorrichtung (10) hat einen Körper (11) aus Leichtbauwerkstoff, wie beispielsweise Schaumstoff, und mindestens ein Handhabungselement (14; 19, 20, 21) zum Handhaben des aufzunehmenden und zu handhabenden Bauteils (2a). Das mindestens eine Handhabungselement (14; 19, 20, 21) ist derart an dem Körper (11) befestigt, dass der Körper (11) und das mindestens eine Handhabungselement (14; 19, 20, 21) zum Tragen der Last des Bauteils (2a) zusammenwirken. Mit der Vorrichtung kann bei einer Anlage 1 zur Fertigung mindestens eines Gegenstands 2 zum Einsatz kommen, der aus mehreren gleichen oder verschiedenen Bauteilen 2a besteht, wie beispielsweise ein Kraftfahrzeug, ein Lastkraftwagen, ein Audiogerät, usw.,. Das Bauteil 2a kann ein Karosserieteil eines Kraftfahrzeugs usw. sein.

## Beschreibung

Die Erfindung bezieht sich auf eine Vorrichtung zur Aufnahme und Handhabung eines Bauteils und ein Verfahren zum Herstellen einer solchen Vorrichtung, und insbesondere auf eine Vorrichtung zur Aufnahme und Handhabung eines Bauteils eines Gegenstands bei dessen Fertigung und ein Verfahren zum Herstellen einer solchen Vorrichtung.

Bei der industriellen Fertigung eines Gegenstands, wie beispielsweise Kraftfahrzeugen, technischen Anlagen, Möbeln, usw., werden üblicherweise einzelne Bauteile des zu fertigenden Gegenstands von einem Ort zum anderen bewegt, das Bauteil um seine Achse geschwenkt, und/oder für eine bestimmte Behandlungsweise in einer speziellen Position gehalten, usw. Hierzu wird derzeit im Stand der Technik ein Greifwerkzeug verwendet, das sowohl die Last des Gegenstands tragen kann als auch ausreichend dimensioniert ist, um den Gegenstand sicher und ausreichend schnell von einer Ausgangsposition in eine gewünschte andere Position zu bewegen und ihn an diesen Positionen auch zu halten.

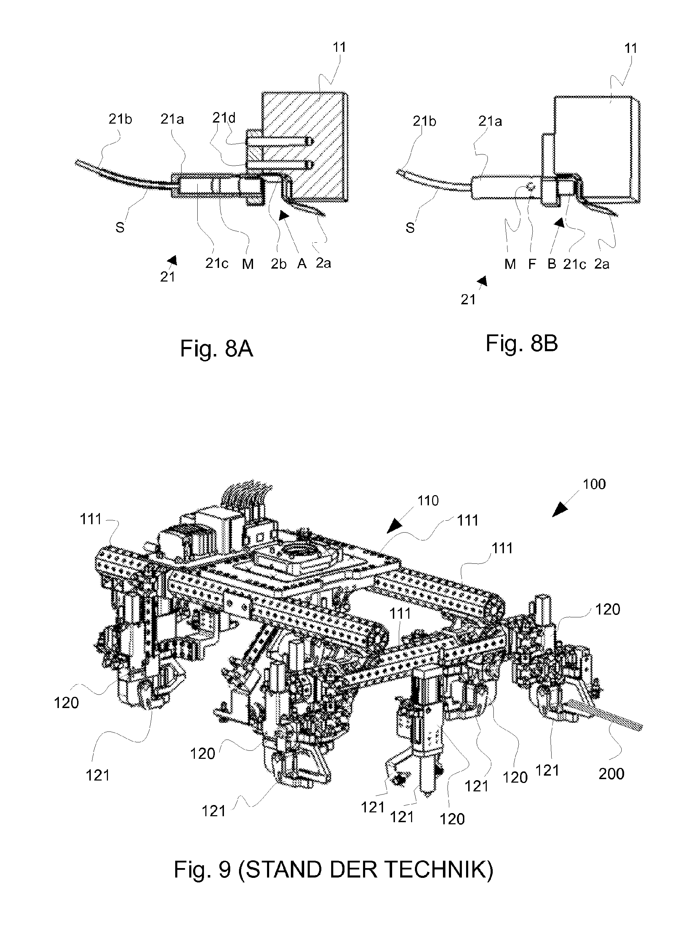

Fig. 9 zeigt ein derartiges Greifwerkzeug 100 des Standes der Technik, das einen Körper 110 mit mehreren Greifarmen 120 hat, die an ihrem einen Ende jeweils mehrere Greiffinger 121 aufweisen. Mit Hilfe der Greiffinger 121 kann ein Bauteil 200 gegriffen und gehalten werden, das in Fig. 9 nur schematisch und sehr vereinfacht dargestellt ist. Der Körper 110 besteht aus einer Vielzahl von metallischen Einzelteilen 111, die miteinander beispielsweise mittels Schrauben, Bolzen oder Schweißverbindungen verbunden sind. Aufgrund dieser Konstruktion ist das Greifwerkzeug 100 sowohl in der Dimensionierung als auch in der Herstellung sehr aufwändig und dadurch teuer. Zudem ist das Greifwerkzeug 100 mit einem Gesamtgewicht von ca. 90 kg vergleichsweise schwer.

Dadurch ist wiederum eine Anlage, in die das Greifwerkzeug 100 integriert ist, für ein große Traglast auszulegen und die benötigte Antriebskraft zum Antrieb eines solchen Greifwerkzeugs 100 ist relativ hoch. Außerdem ist eine Umrüstung der Anlage zwischen verschiedenen Greifwerkzeugen 100, die jeweils für spezielle Greifaufgaben gestaltet sind, vergleichsweise zeitaufwändig, was zu hohen Anlagenstillstandzeiten führt.

Ein weiteres Greifwerkzeug ist beispielsweise aus der DE9104388U1 bekannt. Zudem sind im Stand der Technik Greifwerkzeuge für die industrielle Fertigung von Gegenständen mit Greifarmen erwähnt, bei welchen ein Greifen oder Nicht-Greifen des Greifwerkzeugs pneumatisch, elektrisch, oder mittels Vakuum angetrieben wird. Zudem ist auch der Antrieb von Greiffingern eines Greifarms per Seilzug (Bowdenzug) bekannt.

Ferner beschreibt die DE 102 34 036 A1 einen rohrförmigen Hubmast oder Träger, der im wesentlichen aus nichtmetallischen Verbundwerkstoffen hergestellt ist und einen kastenartigen, vorzugsweise rechteckigen, Aufbau hat. Der kastenartige Aufbau hat vier Eckprofile aus faserverstärktem Kunststoff (FVK) als Ecken des kastenartigen Aufbaus. Zwischen je zwei Eckprofilen ist jeweils eine Platte aus nichtmetallischem Verbundwerkstoff eingesetzt. Der Verbundwerkstoff hat eine Sandwichkonstruktion aus zwei Deckplatten, die vorzugsweise das gleiche Material wie die vier Eckprofile haben. Zwischen den zwei Deckplatten befindet sich eine Zwischenschicht aus geschäumtem Material. Das Innere des Mastes ist in der Regel ein luftgefüllter Hohlraum, der jedoch zur Versteifung des Hubmastes gegen Einknicken auch mit Hartschaum gefüllt sein kann. Durch diese Konstruktion können Gewicht bzw. Trägheitsmoment des Hubmastes reduziert werden, was die Dynamik der Baugruppe erhöht. Zudem ist die Konstruktion und Herstellung des Hubmastes gegenüber dem Körper 110 des in Fig. 9 gezeigten Greifwerkzeugs 100 einfacher. Jedoch wäre eine weitere Vereinfachung der Konstruktion und Gewichtsreduktion für den Körper 110 des in Fig. 9 gezeigten Greifwerkzeugs 100 wünschenswert, wobei gleichzeitig eine ausreichende Stabilität des Körpers 110 für die durch ihn zu verrichtenden Aufgaben gewährleistet sein muss.

Es ist daher Aufgabe der Erfindung, eine Vorrichtung zur Aufnahme und Handhabung eines Bauteils und ein Verfahren zum Herstellen einer solchen Vorrichtung zur Verfügung zu stellen, welche die zuvor genannten Probleme des Standes der Technik lösen.

Die Aufgabe wird durch eine Vorrichtung zur Aufnahme und Handhabung eines Bauteils nach Patentanspruch 1 gelöst. Die Vorrichtung umfasst einen Körper aus Leichtbauwerkstoff und mindestens ein Handhabungselement zum Handhaben des aufzunehmenden und zu handhabenden Bauteils, wobei das mindestens eine Handhabungselement derart an dem Körper befestigt ist, dass der Körper und das mindestens eine Handhabungselement zum Tragen der Last des Bauteils zusammenwirken.

Vorteilhafte weitere Ausgestaltungen der Vorrichtung sind in den abhängigen Patentansprüchen angegeben.

Vorzugsweise hat die Vorrichtung mindestens zwei Handhabungselemente, die derart an dem Körper befestigt sind, dass sie zum Greifen des Bauteils zusammenwirken.

Es ist von Vorteil, wenn das mindestens eine Handhabungselement jeweils ein bewegbares Teil aufweist, das zwischen einer geöffneten Stellung, in welcher das Handhabungselement das Bauteil nicht aufnehmen und handhaben kann, und einer geschlossenen Stellung, in welcher das Handhabungselement das Bauteil aufnehmen und handhaben kann, hin und her bewegbar ist. Hierbei können mindestens zwei bewegbare Teile des Handhabungselements zum Greifen des Bauteils (2a) zusammenwirken. Ferner kann das jeweils eine bewegbare Teil des mindestens einen Handhabungselements mittels Seilzug, Stange, pneumatisch, magnetisch und/oder elektrisch zwischen der geöffneten und der geschlossenen Stellung hin und her bewegbar sein.

Das Handhabungselement kann eine Markierung zur Erfassung der Stellung seines bewegbaren Teils aufweisen.

Die Vorrichtung kann zudem eine Antriebseinrichtung-Montageeinrichtung zum Anschluss an eine Antriebseinrichtung zum Antrieb des jeweils einen bewegbaren Teils des mindestens einen

Handhabungselements zwischen der geöffneten und der geschlossenen Stellung umfassen. Hierbei ist es möglich, dass die Antriebseinrichtung Teil der Vorrichtung ist oder Teil einer der Vorrichtung übergeordneten Anlage ist. Zudem kann die Vorrichtung zur stationären Bauteilaufnahme dienen.

Gemäß einer bevorzugten Möglichkeit ist der Körper ein Leichtbauwerkstoffblock , der mindestens einen Hohlraum aufweist oder ein Vollblock ist.

Der Körper kann Vertiefungen aufweisen, an welchen das mindestens eine Handhabungselement an dem Körper befestigt ist.

Vorzugsweise ist der Körper aus Hartschaumstoff, Balsaholz oder Hartschaumpolystyrol gefertigt.

Die Aufgabe wird zudem durch ein Verfahren zum Herstellen einer Vorrichtung zur Aufnahme und Handhabung eines Bauteils nach Patentanspruch 13 gelöst. Das Verfahren hat den Schritt: aneinander Befestigen eines Körpers aus Leichtbauwerkstoff und mindestens eines Handhabungselements zum Handhaben des aufzunehmenden und zu handhabenden Bauteils derart, dass der Körper und das mindestens eine Handhabungselement zum Tragen der Last des Bauteils zusammenwirken.

Vorzugsweise hat das Verfahren zudem die Schritte: Erzeugen mindestens eines Hohlraums in dem Körper; und/oder Überziehen des Körpers mit einem Überzug zum Schutz des Körpers gegen Umwelteinflüsse und/oder zur Erhöhung der Steifigkeit oder Festigkeit des Körpers.

Die zuvor beschriebene Vorrichtung kann bei dem automatisierten Handhaben und insbesondere dem Greifen von Gegenständen oder ihrer Bauteile zum Einsatz kommen und kann somit zur Fertigung von Gegenständen aus mehreren einzelnen Bauteilen oder auch zu deren Demontage usw. Verwendung finden. Die Vorrichtung ist dabei sehr anwenderfreundlich, da sich Vorteile bei ihrer Konstruktion, Fertigung, Montage, Inbetriebnahme, Wartung / Instandhaltung und Demontage ergeben. Das heißt, die Vorrichtung ist deutlich einfacher zu entwickeln und herzustellen und besteht aus erheblich kostengünstigeren Komponenten als eine Vorrichtung des Standes der Technik.

Zudem vermindern sich die Umrüstzeiten einer mit der beschriebenen Vorrichtung ausgestatteten Anlage bei verschiedenen Greifaufgaben und somit die Stillstandszeiten der Anlage. Außerdem ist die Qualität der Handhabung und somit eines letztendlich hergestellten Gegenstands verbessert. Auch dadurch ist also mit der erfindungsgemäßen Vorrichtung hohes Einsparpotential in Bezug auf Zeit und Geld im Vergleich zum bisherigen Stand der Technik wirkungsvoll genutzt.

Darüber hinaus ist die Ökobilanz der erfindungsgemäßen Vorrichtung durch den geringeren Einsatz von Grundstoffen, die vereinfachte und umweltverträgliche Entsorgung der Vorrichtung, sowie den durch die Verminderung des Gewichts bedingten geringeren Antriebsbedarf gegenüber dem Stand der Technik deutlich verbessert.

Nachfolgend ist die Erfindung unter Bezugnahme auf die beiliegende Zeichnung und anhand von Ausführungsbeispielen näher beschrieben. Es zeigen:
Fig. 1 eine dreidimensionale Ansicht einer Vorrichtung gemäß einem ersten Ausführungsbeispiel der vorliegenden Erfindung;
Fig. 2A und Fig. 2B jeweils eine geöffnete und geschlossene Stellung eines bewegbaren Teils eines Handhabungselements der in Fig. 1 gezeigten Vorrichtung;
Fig. 3 eine dreidimensionale Untersicht unter die in Fig. 1, Fig. 2A und Fig. 2B gezeigte Vorrichtung;
Fig. 4 eine dreidimensionale Ansicht einer Vorrichtung gemäß einem zweiten Ausführungsbeispiel der vorliegenden Erfindung;
Fig. 5A und Fig. 5B jeweils eine geöffnete und geschlossene Stellung eines bewegbaren Teils eines Handhabungselements der in Fig. 4 gezeigten Vorrichtung;
Fig. 6 eine dreidimensionale Detailansicht der in Fig. 4 gezeigten Vorrichtung;
Fig. 7A und Fig. 7B jeweils die geöffnete und geschlossene Stellung eines bewegbaren Teils eines weiteren Handhabungselements der in Fig. 4 gezeigten Vorrichtung;
Fig. 8A und Fig. 8B jeweils die geöffnete und geschlossene Stellung eines bewegbaren Teils noch eines weiteren Handhabungselements der in Fig. 4 gezeigten Vorrichtung; und
Fig. 9 eine dreidimensionale Ansicht einer Vorrichtung gemäß dem Stand der Technik.

In den Figuren sind gleiche Teile, die in einer Figur mehrfach vorkommen, aus Gründen der Übersichtlichkeit der Darstellung nicht alle mit Bezugszeichen gekennzeichnet.

### (Erstes Ausführungsbeispiel)

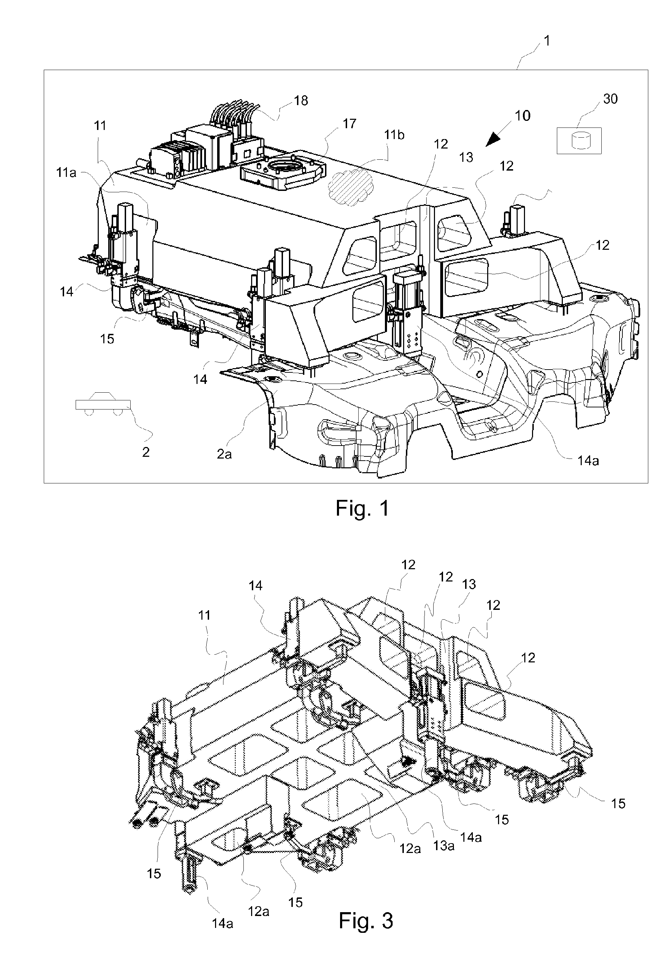

Fig. 1 zeigt schematisch eine Anlage 1 zur Fertigung mindestens eines Gegenstands 2, der in Fig. 1 schematisch als Kraftfahrzeug im kleineren Maßstab dargestellt ist, und der aus mehreren gleichen oder verschiedenen Bauteilen 2a besteht, wie beispielsweise das in Fig. 1 dargestellte metallene Kraftfahrzeugkarosserieteil. Der Gegenstand 2 kann beispielsweise auch ein Lastkraftwagen, ein Audiogerät, usw. sein, so dass das Bauteil 2a eines ihrer Einzelteile ist. Die Anlage 1 hat eine Vorrichtung 10 zur Aufnahme und Handhabung des Bauteils 2a bei der Fertigung des Gegenstands 2 und eine Antriebseinrichtung 30 zum Antrieb der Vorrichtung 10.

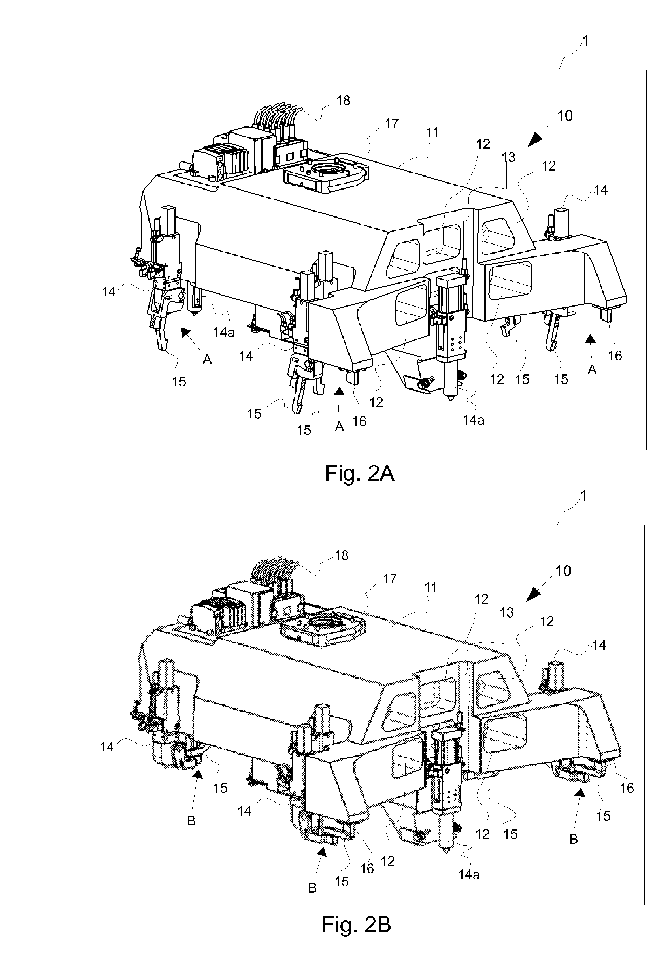

Die Vorrichtung 10 umfasst einen Körper 11, der Vertiefungen 11a aufweist, mit einem in Fig. 1 nur angedeuteten Überzug 11b versehen ist und mehrere bzw. eine Vielzahl von Hohlräumen 12 und sie umgebende Stege 13 hat, und an den Vertiefungen 11a mehrere Handhabungselemente 14, die mit dem Körper 11 verbunden sind und an ihrem einen Ende ein bewegbares Teil 15 aufweisen, das zwischen einer geöffneten Stellung A, die in Fig. 2A gezeigt ist, und einer geschlossenen Stellung B, die in Fig. 2B gezeigt ist, hin und her bewegt werden kann. Zudem hat der Körper 11 zwei Zentrierstifte 14a, welche in nicht dargestellte Zentrierpunkte des Bauteils 2a eingreifen können, wenn das Bauteil 2a an der Vorrichtung 10 richtig ausgerichtet ist. In Fig. 2A und Fig. 2B ist das Bauteil 2a zur Verdeutlichung der Darstellung des bewegbaren Teils 15 nicht gezeigt. In der geöffneten Stellung A kontaktieren die bewegbaren Teile 15 Andockteile 16 nicht, wohingegen sie in der geschlossenen Stellung B die Andockteile 16 kontaktieren bzw. berühren. Das Bauteil 2a kann in der geschlossenen Stellung B der bewegbaren Teile 15 zwischen bewegbarem Teil 15 und Andockteil 16 eingeklemmt bzw. eingespannt sein. Zum Schutz des Bauteils 2a können die bewegbaren Teile 15 und/oder die Andockteile 16 mit einem nicht dargestellten Überzugselement aus Schaumstoff oder Gummi usw. versehen sein. Bei Bedarf kann das Andockteil 16 auch entfallen, so dass das mindestens eine bewegbare Teil 15 in seiner geschlossenen Stellung B das Bauteil 2a direkt an den Körper 11 spannt.

Mit den bewegbaren Teilen 15 kann ein Bauteil 2a (Fig. 1) gegriffen und gehalten werden, um das Bauteil 2a über eine bestimmte Strecke zu transportieren, in eine bestimmte Stellung zu schwenken usw. Das bewegbare Teil 15 ist also an dem Handhabungselement 14 zwischen mindestens zwei Stellungen A, B hin und her bewegbar. Außerdem hat die Vorrichtung 10 eine Antriebseinrichtung-Montageeinrichtung 17, an welche die Antriebseinrichtung 30 (Fig. 1) der Anlage 1 zum Antrieb der Handhabungselemente 14 bzw. ihrer bewegbaren Teile 15 über mindestens eine einer Vielzahl von Leitungsverbindungen 18 anschließbar ist, wie in Fig. 1, Fig. 2A und Fig. 2B gezeigt. Die Leitungsverbindungen 18 sind Teil eines pneumatischen oder elektrischen Antriebssystems, oder arbeiten mit Vakuum- bzw. mit Unterdruckkraft. Die Handhabungselemente 14 und ihre bewegbaren Teile 15 wirken bei der in Fig. 1, Fig. 2A und Fig. 2B gezeigten Vorrichtung 10 bevorzugt als Greifarme mit ihren Greiffingern.

Der Körper 11 ist in Fig. 1, Fig. 2A und Fig. 2B ein Leichtbauwerkstoffblock, in dem die Hohlräume 12 hergestellt sind, beispielsweise durch Bohren oder Fräsen usw., so dass Stege 13 zwischen den Hohlräumen 12 stehenbleiben und die einzelnen Hohlräume 12 voneinander trennen. Die Stege 13 dienen vor allem zur Versteifung des Körpers 11 gegen Verwindung. Das Äußere des Körpers 11, also der Leichtbauwerkstoffblock, ist je nach Anwendungsfall entsprechend modelliert, beispielsweise gefräst, wobei vorzugsweise die Störkanten des Blocks entfernt werden bzw. sind.

Der Leichtbauwerkstoffblock des Körpers 11 besteht bevorzugt aus Hartschaumstoff, einem Leichtbauwerkstoff, der beispielsweise unter der Marke Rohacell^{®} vertrieben wird, Balsaholz, oder Hartschaumpolystyrol, das auch unter der Marke Styropor^{®} bekannt ist, usw.. Diese Werkstoffe bieten ausreichend Festigkeit und Steifigkeit, um sowohl die Gewichtskraft der Handhabungselemente 14 als auch des mittels des bewegbaren Teils 15 gegriffenen Bauteils 2a zu tragen. Die Oberfläche des Körpers 11 ist vorzugsweise ganz mit dem Überzug 11b überzogen, der vorzugsweise ein mit einem Pinsel oder Spachtel usw. streichbarer oder ein sprühbarer Stoff ist, wie beispielsweise ein Lack, in den der Körper 11 zum Zwecke des Anbringens des Überzugs 11b auch tauchbar ist. Der Überzug 11b dient zum Schutz des Körpers 11 gegen Umwelteinflüsse, wie beispielsweise Beschädigungen durch Flüssigkeiten, Gase, Stöße, Schweißspritzer usw. oder auch zur Erhöhung der Steifigkeit oder Festigkeit des Körpers 11. Der Überzug 11b kann beispielsweise aus Polyurethan / CFK-Kurzfaser bestehen. Das bedeutet, das tragende Teil des Körpers 11 ist ausschließlich der Schaumstoffblock. Es wird kein zusätzliches Teil oder etwa eine Umhüllung des Körpers 11 aus solchen zusätzlichen Teilen benötigt. Zum Erreichen einer Schutzwirkung für den Körper 11 wie der Überzug 11b kann der Körper 11 jedoch auch mit einer Umhüllung aus beispielsweise Kunststoff versehen sein, die jedoch keine tragende Funktion erfüllen muss.

In Fig. 1 sind die Handhabungselemente 14, ihre bewegbaren Teile 15 zum Abstützen der Handhabungselemente 14 an dem Körper 11 beispielsweise aus Metall oder auch aus Kunststoff usw. gefertigt. Das Material richtet sich nach der Festigkeit, die von den Handhabungselementen 14 und ihren bewegbaren Teile 15 gefordert wird. Die bewegbaren Teile 15 können beispielsweise auch ganz oder teilweise aus Schaumstoff gefertigt sein, wenn sie ein besonders berührungsempfindliches Bauteil zu kontaktieren haben.

Die Handhabungselemente 14 und der Körper 11 sind so aneinander befestigt, dass mindestens ein Handhabungselement 14 an den Körper 11 geklebt ist. Alternativ können die Handhabungselemente 14 in den Körper 11 versenkt und bei Bedarf noch zusätzlich verklebt sein. Gemäß einer weiteren Alternative können die Handhabungselement 14 mittels mindestens einem nicht dargestellten Adapterelement an dem Körper 11 befestigt sein. Hierbei kann das Handhabungselement 14 an mindestens einem Adapterelement befestigt sein, beispielsweise mittels Schrauben, Vernieten,Schweißen, Löten usw., und das mindestens eine Adapterelement ist durch Verkleben und/oder Versenken mit dem Körper 11 verbunden. Bei jeder dieser Befestigungsarten sind die Handhabungselemente 14 derart an dem Körper 11 befestigt, dass der Körper 11 und die Handhabungselemente 14 zum Tragen der Last des Bauteils 2a zusammenwirken. Die Last des Bauteils 2a ergibt sich hierbei aus der statischen bzw. beschleunigten Gewichtskraft des Bauteils 2a. Die Befestigungsstelle zwischen Körper 11 und einem Handhabungselement 14 sollte somit mindestens etwas mehr als die Last dieses Handhabungselements 14 und die von diesem aufzunehmende Last des Bauteils 2a aufnehmen können.

Bei der Vorrichtung 10 kann entweder ein Handhabungselement 14 mit seinem bewegbaren Teil 15 allein ein Bauteil 2a greifen, indem es das Bauteil 2a zwischen Körper 11 und bewegbares Teil 15 klemmt bzw. spannt. Es ist aber auch möglich, dass bei der Vorrichtung 10 mindestens zwei Handhabungselemente 14 zusammenwirken und zusammen ein größeres oder schweres Bauteil 2a, beispielsweise eine Fahrzeugtür, Motorhaube, oder Teile davon, usw., greifen, wie in Fig. 1 dargestellt.

Fig. 3 zeigt die Vorrichtung 10 von Fig. 1 perspektivisch von unten. Wie in Fig. 3 zu sehen, sind in der Unterseite des Körpers 11 weitere Hohlräume 12a vorhanden, die durch Stege 13a voneinander getrennt sind und deren Querschnitt im wesentlichen senkrecht zu dem Querschnitt der Hohlräume 12 angeordnet ist. Anders ausgedrückt, die Stege 13 und die Stege 13a sind quer zueinander angeordnet und stehen bevorzugt im wesentlichen senkrecht aufeinander. Durch diese Anordnung kann die Versteifung des Körpers 11 gegen Verwindung weiter erhöht werden.

Im Vergleich zu der in Fig. 9 gezeigten Vorrichtung 100 des Standes der Technik, die ein Gesamtgewicht von ca. 90 kg hat, hat die in Fig. 1 bis Fig. 3 gezeigte Vorrichtung 10 mit dem Körper 11 aus Leichtbauwerkstoff nur noch ein Gesamtgewicht von ca. 72 kg. Das heißt, durch den Körper 11 ergibt sich bei der Vorrichtung 10 eine Gewichtsersparnis von ca. 20 % gegenüber dem genannten Stand der Technik.

### (Zweites Ausführungsbeispiel)

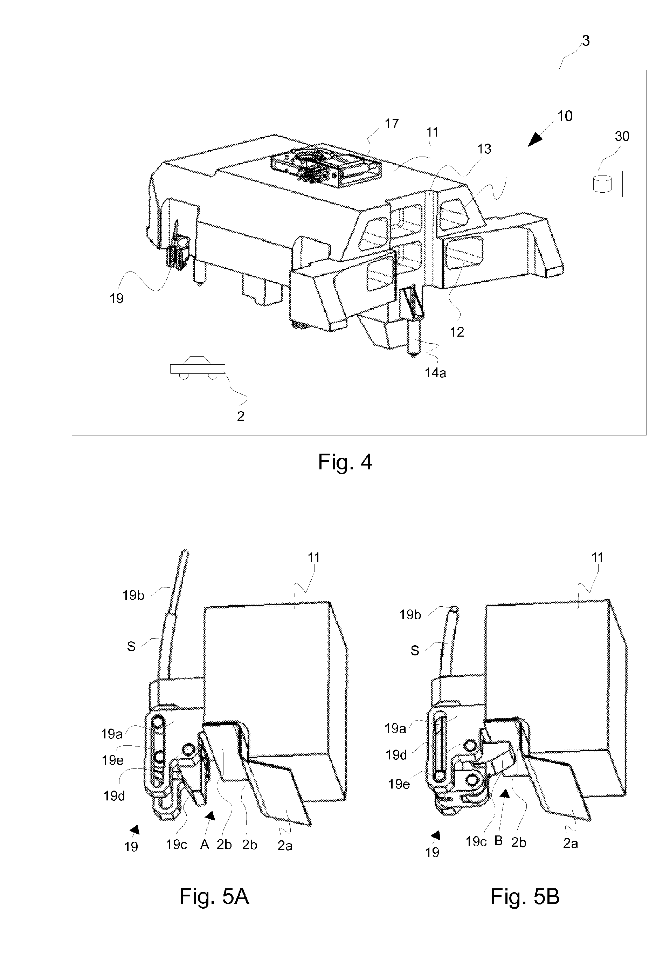

Fig. 4 veranschaulicht eine Anlage 3 gemäß dem zweiten Ausführungsbeispiel, die ebenso eine Vorrichtung 10 und eine Antriebseinrichtung 30 aufweist und auch zur Fertigung mindestens eines Gegenstands 2 dient, wie die Anlage 1 des ersten Ausführungsbeispiels. Das Bauteil 2a ist in Fig. 4 zur Vereinfachung der Darstellung nicht gezeigt. Gleiche und gleichbedeutende Teile in beiden Ausführungsbeispielen sind daher mit den gleichen Bezugszeichen versehen und werden hier nicht erneut beschrieben.

Der Unterschied zwischen dem ersten und zweiten Ausführungsbeispiel besteht darin, dass die Vorrichtung 10 in dem vorliegenden Ausführungsbeispiel, anstelle der Handhabungselemente 14 mit bewegbaren Teilen 15, mindestens ein Handhabungselement als Seilzugelement 19 aufweist. Das Seilzugelement 19 kann auch als Leichtbauspanner bezeichnet werden, der an dem Körper 11 befestigt sein kann, wie auch in Fig. 5A und Fig. 5B genauer gezeigt. Das heißt, das Seilzugelement 19 hat einen Seilzugelementkörper 19a, einen vorzugsweise mit einer Schutzhülle S versehenen enzug bzw. Seilzug 19b, der mit der Antriebseinrichtung-Montageeinrichtung 17 von Fig. 4 verbunden ist, ein bewegbares Teil 19c und eine Schwenkachse 19d, um welche das bewegbare Teil 19c an dem Seilzugelementkörper 19a schwenkbar bzw. bewegbar ist. Das Bauteil 2a ist an möglichen Kontaktpunkten 2b mit dem Seilzugelement 19 mit nicht dargestellten Schutzkörpern versehen, um das Bauteil 2a vor Beschädigungen zu schützen. Die Schutzkörper sind beispielsweise aus Schaumstoff oder Gummi usw. gefertigt. Je nach Bedarf können die Schutzkörper auch entfallen. Es ist auch möglich, dass die Schutzkörper an dem Körper 11 angebracht sind, so dass sie zwischen Bauteil 2a und Körper 11 angeordnet sind. Die Schutzkörper können auch als Stahlteil, beispielsweise eine Stahlplatte, an dem bewegbaren Teil angeordnet sein, so dass mit dem bewegbaren Teil 19c über den Schutzkörper eine direkte Führung auf das Bauteil 2a übertragbar ist. Die Schutzkörper können auch als Wulst aus beispielsweise Polyurethan gefertigt sein.

Der Seilzugelementkörper 19a ist an dem Körper 11 mittels Klebung oder Versenkung und evtl. zusätzliches Kleben oder mittels Adapterelemente(n) befestigt, wie bei dem ersten Ausfügrungsbeispiel beschrieben. Das bewegbare Teil 19c hat die Form einer Spannbacke und dient zum Kontaktieren des Bauteils 2a und zum Spannen des Bauteils 2a an den Körper 11. Genauer gesagt, das bewegbare Teil 19c wird mittels des durch die Antriebseinrichtung 30 angetriebenen Seilzugs 19b zwischen einer geöffneten Stellung A, die in Fig. 5A gezeigt ist, und einer geschlossenen Stellung B, die in Fig. 5B gezeigt ist, hin und her bewegt. In Fig. 5A kontaktiert das bewegbare Teil 19c das Bauteil 2a nicht, wobei der Seilzug 19b von der Antriebseinrichtung 30 nach oben gezogen wird. Demgegenüber kontaktiert in Fig. 5B das bewegbare Teil 19c das Bauteil 2a und spannt das Bauteil 2a zwischen sich und dem Körper 11 ein, wobei der Seilzug 19b von der Antriebseinrichtung 30 nicht gezogen wird sondern als Schubstange wirkt. Genauer gesagt, wird der Seilzug 19b des Seilzugelements 19 als Stange zwischen der geöffneten Stellung A und der geschlossenen Stellung B hin und her geschoben. Der Seilzug 19b wirkt bzw. ist also eine Stange. Falls der Seilzug 19b als Seilzug und nicht als Stange ausgeführt ist, ist die Schutzhülle S vorzugsweise derart ausgestaltet, dass der Seilzug 19b bei seiner Bewegung nicht einknicken kann. Die Schutzhülle S kann eine metallene Hülse sein, beispielsweise ein Drahtrohr.

Zur Bestimmung des Zustands des Seilzugelements 19, genauer gesagt, ob sich das bewegbare Element in der geöffneten Stellung A oder der geschlossenen Stellung B befindet, kann an dem Seilzugelement 19 eine Markierung vorgesehen sein, die mit einer nicht dargestellten optischen Erfassungseinrichtung beispielsweise optisch erfasst wird, so dass der tatsächliche Zustand des Seilzugelements 19 überwacht werden kann. Beispielsweise kann der Bolzen 19e, der durch den Seilzug 19b in einem Langloch des Seilzugelementkörpers 19a vertikal hin und hergeschoben wird, als eine solche Markierung dienen.

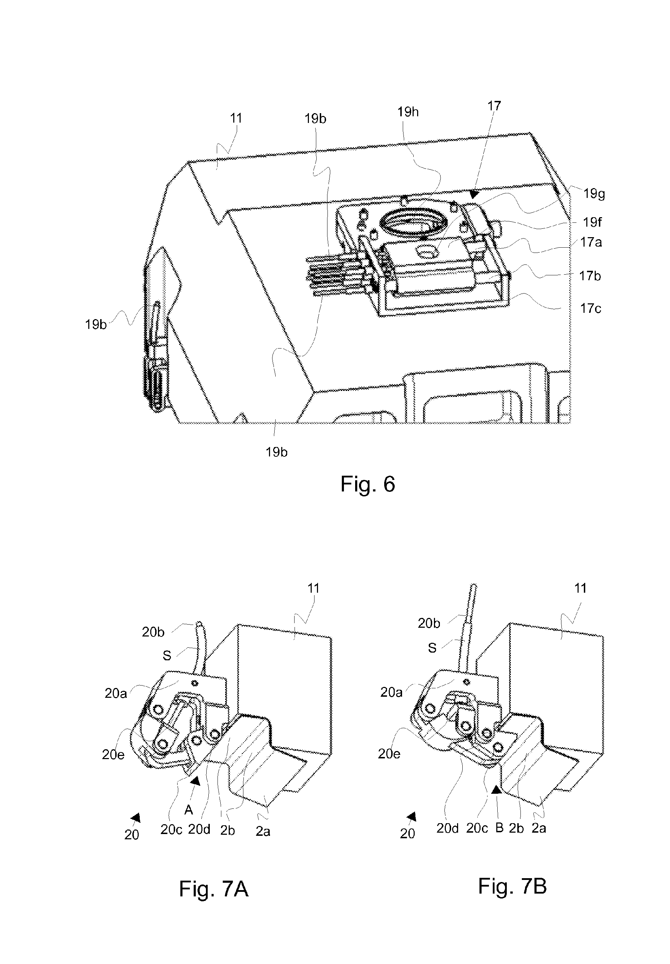

Aufgrund der erwähnten Konstruktion hat die Vorrichtung 10 dieses Ausführungsbeispiels keine Antriebseinrichtung, sondern nur eine Antriebseinrichtung-Montageeinrichtung 17, an welcher die zentrale Antriebseinrichtung 30 der Anlage 1 für alle Seilzugelemente 19 an die Vorrichtung 10 angeschlossen werden kann. In Fig. 6 ist die Antriebseinrichtung-Montageeinrichtung 17 vergrößert dargestellt.

In Fig. 6 hat die Antriebseinrichtung-Montageeinrichtung 17 eine erste Führungssäule 17a und eine zweite Führungssäule 17b an einer Montageplatte 17c, die an der Vorrichtung 10 liegend angeordnet sind. Die Führungssäulen 17a und 17b führen einen Seilzugschlitten 19f. Über ein Andockloch 19g für ein nicht dargestelltes Antriebseinrichtungs-Antriebselement der Antriebseinrichtung 30 kann die Antriebseinrichtung 30 mit dem Seilzugschlitten 19f verbunden werden. An einen Andockflansch 19h ist die Anlage 1 oder einer ihrer nicht dargestellten Roboter ansetzbar. Das Antriebseinrichtungs-Antriebselement der Antriebseinrichtung 30 entriegelt beim Ankoppeln den Seilzugschlitten 19f. Über diese können mehrere Seilzüge 19b von mehreren Seilzugelementen 19 betätigt werden. Dadurch kann ein Bauteil 2a mit mehreren bewegbaren Teilen 19c gleichzeitig an den Körper 11 gespannt werden. Das heißt, es wird eine Vielzahl von Seilzügen der Seilzugelemente 19 miteinander gekoppelt und an der Vorrichtung 10 durch den Seilzugschlitten 19f (Verschiebeeinheit) betätigt. Die Vielzahl der Seilzüge 19b bzw. die Seilzüge 19b können auch einzeln betätigt sein. Die nicht dargestellte Erfassungseinrichtung kann auch die Stellung des Seilzugschlittens 19f oder von Markierungen an den Führungssäulen 17a, 17b erfassen, so dass auch hier der tatsächliche Zustand des Seilzugelements 19 überwacht werden kann.

Die Vorrichtung 10 dieses Ausführungsbeispiels hat also keine Pneumatik oder Elektrik. Das bedeutet, dass das eine oder die mehreren Seilzugelemente 19 ferngesteuert ist/sind.

Bei der Vorrichtung 10 dieses Ausführungsbeispiels können also auch mindestens zwei Seilzugelemente 19, also Handhabungselemente, zusammenwirken und zusammen ein größeres Bauteil 2a, beispielsweise eine Fahrzeugtür, Motorhaube, oder Teile davon usw., greifen.

Im Vergleich zu der in Fig. 9 gezeigten Vorrichtung 100 des Standes der Technik, die ein Gesamtgewicht von ca. 90 kg hat, hat die in Fig. 4 bis Fig. 6 gezeigte Vorrichtung 10 mit dem Körper 11 aus Leichtbauwerkstoff und den Seilzugelementen 19 anstelle der Greifarme 14, Greiffinger 15 und Verstrebungen 16 nur noch ein Gesamtgewicht von ca. 45 kg. Das heißt, durch den Körper 11 und die genannten Seilzugelemente 19 und Verlagerung der Antriebseinrichtung 30 zu der Anlage 1 ergibt sich bei der Vorrichtung 10 dieses Ausführungsbeispiels eine Gewichtsersparnis von ca. 50 % gegenüber dem genannten Stand der Technik.

### (Erste Variante des zweiten Ausführungsbeispiels)

Fig. 7A und Fig. 7B stellen eine erste Variante des Seilzugelements 19 des zweiten Ausführungsbeispiels dar, die in Fig. 5A und Fig. 5B gezeigt ist. Genauer gesagt, es ist in Fig. 7A und Fig. 7B jeweils ein Seilzugelement 20 gezeigt, das einen Seilzugelementkörper 20a, einen Bowdenzug bzw. Seilzug 20b, der mit der Antriebseinrichtung-Montageeinrichtung 17 von Fig. 4 verbindbar und mit einer Schutzhülle S umgeben ist, ein bewegbares Teil 20c, eine Schwenkachse 20d und eine Stange 20e hat. Das heißt der Seilzug 20b weist im endseitigen Bereich seines innenliegenden Drahtseilzugselements eine unbiegsame Zug - Druckstange (20e) auf. Die Stange 20e ist mit dem Seilzug 20b derart gekoppelt, dass das bewegbare Teil 20c an dem Seilzugelementkörper 20a um die Schwenkachse 20d schwenkbar bzw. bewegbar ist. Die Bewegung des bewegbaren Teils 20c erfolgt bei der Seilzugelement 20 gleichermaßen wie bei dem Seilzugelement 19 zwischen einer geöffneten und einer geschlossenen Stellung A, B bzw. zwischen einer kontaktlosen Stellung und einer Kontaktstellung.

In Fig. 7A kontaktiert das bewegbare Teil 20c das Bauteil 2a nicht, wobei der flexible Seilzug 20b nicht an der Stange 20e zieht, also nicht von der Antriebseinrichtung 30 bzw. dem Seilzugschlitten 19e gezogen wird. Die Stange 20e wird also in die in Fig. 7A gezeigte Stellung nach unten geschoben. Somit befindet sich das bewegbare Teil 20c in Fig. 7A in der geöffneten Stellung A. Demgegenüber kontaktiert in Fig. 7B das bewegbare Teil 20c das Bauteil 2a und spannt das Bauteil 2a zwischen sich und dem Körper 11 ein, wobei der Seilzug 20b von der Antriebseinrichtung 30 bzw. dem Seilzugschlitten 19e nach oben gezogen wird. Somit befindet sich das bewegbare Teil 20c durch die Schubwirkung der Stange 20e nach oben in Fig. 7B in der geschlossenen Stellung B. Demzufolge schiebt der Seilzug 20b die Stange 20e in Fig. 7A, wohingegen er bei Fig. 7B die Stange 20e zieht.

Auch bei der ersten Variante des zweiten Ausführungsbeispiels ist die Gewichtsersparnis für die Vorrichtung 10 von ca. 50 % gegenüber dem genannten Stand der Technik gegeben.

### (Zweite Variante des zweiten Ausführungsbeispiels)

Fig. 8A und Fig. 8B stellen eine zweite Variante des Seilzugelements 19 des zweiten Ausführungsbeispiels dar, die in Fig. 5A und Fig. 5B gezeigt ist. Genauer gesagt, Fig. 8A zeigt ein Seilzugelement 21 in einer dreidimensionalen Schnittansicht, wohingegen Fig. 8B das Seilzugelement 21 in einer dreidimensionalen Seitenansicht zeigt. In Fig. 8A und Fig. 8B hat das Seilzugelement 21 jeweils einen Seilzugelementkörper 21a, einen mit einer Schutzhülle S umgebenen Bowdenzug bzw. Seilzug 21b, der mit der Antriebseinrichtung 17 von Fig. 4 verbindbar ist, ein bewegbares Teil 21c in Form eines zylindrischen Kolbens und zwei Befestigungsstifte 21d. Der Seilzugelementkörper 21a ist mit Hilfe der beiden Befestigungsstifte 21d an dem Körper 11 der Vorrichtung 10 befestigt, bzw. in dem Körper 11 verankert, wie aus Fig. 8A ersichtlich. Zusätzlich ist noch eine Verklebung der beiden Befestigungsstifte 21d mit dem Körper 11 und/oder eine Verklebung von Seilzugelementkörper 21a und Körper 11 möglich, falls erforderlich.

Eine Bewegung des bewegbaren Teils 21c erfolgt auch bei dem Seilzugelement 21, wie bei dem Seilzugelement 19, zwischen einer geöffneten und einer geschlossenen Stellung A, B, bzw. zwischen einer kontaktlosen Stellung und einer Kontaktstellung. Hierzu wird das bewegbare Teil 21c in dem Seilzugelementkörper 21a hin und her geschoben. Der Seilzugelementkörper 21a weist hierzu eine zylindrische Hülse auf, in der das bewegbare Teil 21c umschlossen ist und geführt wird. In Fig. 8A kontaktiert das bewegbare Teil 21c das Bauteil 2a nicht, wobei der Seilzug 21b von der Antriebseinrichtung 30 bzw. dem Seilzugschlitten 19e nach oben gezogen wird, also gespannt ist. Somit befindet sich das bewegbare Teil 21c in Fig. 8A in der geöffneten Stellung A. Demgegenüber kontaktiert in Fig. 8B das bewegbare Teil 21c das Bauteil 2a und spannt das Bauteil 2a zwischen sich und dem Körper 11 ein, wobei der Seilzug 21b von der Antriebseinrichtung 30 bzw. dem Seilzugschlitten 19e nicht gezogen wird sondern entspannt ist. Somit befindet sich das bewegbare Teil 21c in Fig. 8B in der geschlossenen Stellung B.

An dem bewegbaren Teil 21c befindet sich eine Markierung M, die bei geschlossenem bewegbaren Teil 21c des Seilzugelements 21 in einem Fenster F des Seilzugelementkörpers 21a sichtbar ist, wie aus Fig. 8B ersichtlich. Demgegenüber ist die Markierung M bei geöffnetem bewegbaren Teil 21c des Seilzugelements 21 in dem Fenster F des Seilzugelementkörpers 21a nicht sichtbar, wie aus Fig. 8A ersichtlich. Das Seilzugelement 21 bzw. das Handhabungselement hat somit eine Markierung M, die zur Erfassung der Stellung seines bewegbaren Teils 21c dient und mit einer optischen Erfassungseinrichtung erfasst werden kann.

Auch bei der zweiten Variante des zweiten Ausführungsbeispiels ist die Gewichtsersparnis für die Vorrichtung 10 von ca. 50 % gegenüber dem genannten Stand der Technik gegeben.

### (Allgemeines)

Alle zuvor beschriebenen Ausgestaltungen der Vorrichtung 10 und des Verfahrens können einzeln oder in allen möglichen Kombinationen Verwendung finden. Hierbei sind insbesondere folgende Modifikationen denkbar.

Auch wenn die Vorrichtung 10 bei der vorangehenden Beschreibung Teil einer Anlage 1 oder 3 ist und von dieser Anlage 1 oder 3 gesteuert wird, also ein robotergeführtes Element ist, kann die Vorrichtung 10 auch nur als stationäre Bauteilaufnahme fungieren. In diesem Fall ist die Antriebseinrichtung 30 nicht Teil der Anlage 1 oder 3 sondern ist Teil der Vorrichtung 10 selbst.

Der Körper 11 kann entweder aus einem einzigen Leichtbauwerkstoffblock geschnitten werden oder aus mehreren Leichtbauwerkstoffblockschichten oder -teilen bestehen, die aneinander befestigt sind, beispielsweise durch Kleben, gegebenenfalls auch durch Verschweißen usw. Beispielsweise können dies zwei Leichtbauwerkstoffblockschichten sein, bei denen, wie in Fig. 3 ersichtlich, die eine Leichtbauwerkstoffblockschicht die Hohlräume 12 und die Stege 13 dazwischen aufweist, während die andere Leichtbauwerkstoffblockschicht die Hohlräume 12a und die Stege 13a dazwischen aufweist. Wenn der Körper 11 aus Schaumstoff hergestellt wird, kann er auch in einem Formwerkzeug, gegebenenfalls auch mit Hohlräumen 12 oder 12a, hergestellt werden, in welches Schaumstoff extrudiert wird. Vorzugsweise wird der Körper 11 mit dem Formwerkzeug als optimierter Vollkörper hergestellt. Das heißt, der Vollkörper hat keine Hohlräume 12 oder 12a und ist in Bezug auf seine Außenkontur optimiert, da er bereits die endgültige Form hat. Genauer gesagt, die äußere Form des Körpers 11 muss in diesem Fall nicht mehr mittels eines Werkzeugs, wie beispielsweise einem Draht, bearbeitet werden.

Der Körper 11 stellt mit seinen Hohlräumen 12, 12a und Stegen 13, 13a ein Leichtbauwerkstoffblock-Gerippe dar, das durch partielle Verstärkungen, bzw. Stringer, beispielsweise auch aus Spanplatte(n), weiter stabilisiert werden kann. Die Hohlräume 12, 12a können gleich oder auch verschieden groß, bzw. lang, breit und hoch, sein. Zudem können die Stege 13, 13a gleich oder auch verschieden groß, bzw. lang, breit und hoch, sein. Der Körper 11 muss jedoch keinen der Hohlräume 12, 12a aufweisen und kann somit auch ein Vollblock ohne Hohlräume 12, 12a sein. Ferner kann der Körper 11 auch nur einen Hohlraum aufweisen, wobei dies ein Hohlraum 12 oder ein Hohlraum 12a sein kann. Die Anzahl der Hohlräume 12, 12a ist also beliebig wählbar. Darüber hinaus ist die Anordnung und Abmessung des/der Hohlraums/Hohlräume 12, 12a in dem Körper 11 frei wählbar. Die Hohlräume 12, 12a können neben der in den Figuren abgebildeten quadratischen Form auch dreieckig, rechteckig, fünfeckig usw., oder rund, oval usw., also beliebig geformt sein. Je größer die Anzahl der in dem Körper 11 vorhandenen Hohlräume 12, 12a ist und/oder je größer die Hohlräume 12, 12a sind, desto mehr Gewicht kann bei dem Körper 11 eingespart werden. Die Hohlräume 12, 12a können durch Abdeckplatten im außenseitigen Umfangsbereich verschlossen werden, wobei die Abdeckplatten vorzugsweise aus dem gleichen Material wie der Körper 11 bestehen können und beispielsweise aufgeklebt werden können.

Die äußere Gestalt des Körper 11 ist beliebig und nicht auf die in den Figuren gezeigte Darstellung beschränkt. Das heißt, die Handhabungselemente 14 können je nach Bedarf an Vertiefungen 11a oder nicht dargestellten Ausbuchtungen des Körpers 11 angesetzt und/oder befestigt sein.

Bei der Vorrichtung 10 kann ein Handhabungselement 14 auch mehrere bewegbare Teile 15 aufweisen, die zusammen ein Bauteil 2a greifen. Das heißt, in diesem Fall wirken nicht unbedingt mindestens zwei Handhabungselemente 14 zusammen, um zusammen ein größeres Bauteil 2a, beispielsweise eine Fahrzeugtür, Motorhaube, oder Teile davon, usw., zu greifen. Es können aber wiederum auch zwei Handhabungselemente 14 zusammenwirken, die jeweils mehrere bewegbare Teile 15 aufweisen, oder bei denen nur ein Handhabungselement 14 mehrere bewegbare Teile 15 aufweist, wohingegen das andere nur ein bewegbares Teil 15 hat. Hierbei ist es auch möglich, dass die bewegbaren Teile 15 der Handhabungselemente 14 das Bauteil 2a jeweils kontaktieren, während der Körper 11 und auch die übrigen Teile der Handhabungselemente 14 das Bauteil 2a nicht berühren.

Die Seilzugelemente 19 bis 21 des zweiten Ausführungsbeispiels können je nach Bedarf gewählt werden. Das heißt, es ist zum Einen eine Kombination dieser Seilzugelemente 19 bis 21 an der Vorrichtung 10 möglich. Zum Anderen ist es auch möglich, nur eines oder zwei der Seilzugelemente 19 bis 21 zu verwenden. Darüber hinaus kann die Vorrichtung 10 neben einem oder mehreren Seilzugelementen 19 bis 21 auch ein oder mehrere Handhabungselemente 14 mit bewegbarem Teil 15 und gegebenenfalls Andockteil 16 aufweisen. Das Andockteil 16 kann als Halteelement ausgeführt sein und beispielsweise ein mechanischer Vakuumhalter sein.

Zudem ist für die Handhabungselemente 14, 19, 20, 21 beispielsweise eine Kombination aus Seilzug und Pneumatik denkbar, das heißt ein Pneumatikspanner mit Seilzug.

Die Vorrichtung 10 kann außerdem eine beliebige Kombination von verschiedenen Handhabungselementen 14, 19, 20, 21 aufweisen, je nachdem was für ein Bauteil 2a zu handhaben ist. Demzufolge ist auch die Antriebseinrichtung 30 auszulegen.

## Patentansprüche

1. Vorrichtung (10) zur Aufnahme und Handhabung eines Bauteils (2a) eines Gegenstands (2), mit
einem Körper (11) aus Leichtbauwerkstoff, und
mindestens einem Handhabungselement (14; 19, 20, 21) zum Handhaben des aufzunehmenden und zu handhabenden Bauteils (2a),
wobei das mindestens eine Handhabungselement (14; 19, 20, 21) derart an dem Körper (11) befestigt ist, dass der Körper (11) und das mindestens eine Handhabungselement (14) zum Tragen der Last des Bauteils (2a) zusammenwirken.

2. Vorrichtung nach Anspruch 1, wobei die Vorrichtung (10) mindestens zwei Handhabungselemente (14; 19, 20, 21) aufweist, die derart an dem Körper (11) befestigt sind, dass sie zum Greifen des Bauteils (2a) zusammenwirken.

3. Vorrichtung nach Anspruch 1 oder 2, wobei das mindestens eine Handhabungselement (14; 19, 20, 21) jeweils ein bewegbares Teil (15; 19c, 20c, 21c) aufweist, das zwischen einer geöffneten Stellung (A), in welcher das Handhabungselement (14; 19, 20, 21) das Bauteil (2a) nicht aufnehmen und handhaben kann, und einer geschlossenen Stellung (B), in welcher das Handhabungselement (14; 19, 20, 21) das Bauteil (2a) aufnehmen und handhaben kann, hin und her bewegbar ist.

4. Vorrichtung nach Anspruch 3, wobei mindestens zwei bewegbare Teile (15; 19c, 20c, 21c) des Handhabungselements (14; 19, 20, 21) zum Greifen des Bauteils (2a) zusammenwirken.

5. Vorrichtung nach Anspruch 3 oder 4, wobei das jeweils eine bewegbare Teil (15; 19c, 20c, 21c) des mindestens einen Handhabungselements (14; 19, 20, 21) mittels Seilzug, Stange, pneumatisch, magnetisch und/oder elektrisch zwischen der geöffneten und der geschlossenen Stellung (A, B) hin und her bewegbar ist.

6. Vorrichtung nach einem der Ansprüche 3 bis 5, wobei das Handhabungselement (14; 19, 20, 21) eine Markierung (M) zur Erfassung der Stellung seines bewegbaren Teils (15; 19c, 20c, 21c) aufweist.

7. Vorrichtung nach einem der Ansprüche 3 bis 6, zudem mit einer Antriebseinrichtung-Montageeinrichtung (17) zum Anschluss an eine Antriebseinrichtung (30) zum Antrieb des jeweils einen bewegbaren Teils (15; 19c, 20c, 21c) des mindestens einen Handhabungselements (14; 19, 20, 21) zwischen der geöffneten und der geschlossenen Stellung (A, B).

8. Vorrichtung nach Anspruch 7, wobei die Antriebseinrichtung (30) Teil der Vorrichtung (10) oder Teil einer der Vorrichtung (10) übergeordneten Anlage (1; 3) ist.

9. Vorrichtung nach Anspruch 7, wobei die Vorrichtung (10) zur stationären Bauteilaufnahme dient.

10. Vorrichtung nach einem der vorangehenden Ansprüche, wobei der Körper (11) ein Leichtbauwerkstoffblock ist, der mindestens einen Hohlraum (12, 12a) aufweist oder ein Vollblock ist.

11. Vorrichtung nach einem der vorangehenden Ansprüche, wobei der Körper (11) Vertiefungen (11a) aufweist, an welchen das mindestens eine Handhabungselement (14; 19, 20, 21) an dem Körper (11) befestigt ist.

12. Vorrichtung nach einem der vorangehenden Ansprüche, wobei der Körper (11) aus Hartschaumstoff, Balsaholz oder Hartschaumpolystyrol gefertigt ist.

13. Verfahren zum Herstellen einer Vorrichtung (10) zur Aufnahme und Handhabung eines Bauteils (2a), mit dem Schritt
aneinander Befestigen eines Körpers (11) aus Leichtbauwerkstoff und mindestens eines Handhabungselements (14; 19, 20, 21) zum Handhaben des aufzunehmenden und zu handhabenden Bauteils (2a) derart, dass der Körper (11) und das mindestens eine Handhabungselement (14; 19, 20, 21) zum Tragen der Last des Bauteils (2a) zusammenwirken.

14. Verfahren nach Anspruch 13, zudem mit dem Schritt
Erzeugen mindestens eines Hohlraums (12, 12a) in dem Körper (11).

15. Verfahren nach Anspruch 13 oder 14, zudem mit dem Schritt
Überziehen des Körpers (11) mit einem Überzug (11a) zum Schutz des Körpers (11) gegen Umwelteinflüsse und/oder zur Erhöhung der Steifigkeit oder Festigkeit des Körpers (11).
